(19) Europäisches Patentamt
European Patent Office
Office européen des brevets

(11) **EP 4 213 368 A1**

(12) **EUROPÄISCHE PATENTANMELDUNG**

(43) Veröffentlichungstag:
**19.07.2023   Patentblatt 2023/29**

(21) Anmeldenummer: **22151805.3**

(22) Anmeldetag: **17.01.2022**

(51) Internationale Patentklassifikation (IPC):
**H02P 6/32** $^{(2016.01)}$

(52) Gemeinsame Patentklassifikation (CPC):
**H02P 6/32;** H02P 2207/05

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Primetals Technologies Germany GmbH**
**91058 Erlangen (DE)**

(72) Erfinder:
• **Reinhard, Johannes**
**91332 Heiligenstadt (DE)**
• **Graichen, Knut**
**90562 Heroldsberg (DE)**
• **Loehe, Klaus**
**90768 Fürth (DE)**

(74) Vertreter: **Metals@Linz**
**Primetals Technologies Austria GmbH**
**Intellectual Property Upstream IP UP**
**Turmstraße 44**
**4031 Linz (AT)**

(54) **OPTIMIERTE SOLLSTROMVORGABE FÜR EINEN FREMDERREGTEN SYNCHRONMOTOR**

(57)    Ein Sollwertermittler (10) prüft, ob eine durch das Produkt einer momentanen Drehzahl (n) und eines aufzubringenden Sollmoments (M*) gegebene angeforderte Leistung (P) eines fremderregten Synchronmotors (1) einen Maximalwert (Pmax) für die Leistung (P) übersteigt. Im einen Fall setzt der Sollwertermittler (10) ein erstes Optimierungsproblem (O1) für einen Stromvektor (i) an und löst es in Echtzeit, im anderen Fall ein zweites Optimierungsproblem (O2). Zur Lösung des ersten Optimierungsproblems (O1) ermittelt der Sollwertermittler (10) einen Stromvektor (i), der die feldbildende Komponente (Id) und die momentbildende Komponente (Iq) des Motorstroms (I) und den Erregerstrom (Ie) umfasst, derart, dass das Sollmoment (M*) erreicht wird und die Verluste (V) des Synchronmotors (1) minimiert werden. Im anderen Fall ermittelt der Sollwertermittler (10) den Stromvektor (i) derart, dass das sich ergebende Istmoment (M) maximiert wird. In allen Fällen berücksichtigt der Sollwertermittler (10) die Randbedingungen, gemäß denen der Betrag des Motorstroms (I) maximal den Maximalwert (Imax) für den Motorstrom (I) erreicht, der Betrag des Erregerstroms (Ie) maximal den Maximalwert (Iemax) für den Erregerstrom (Ie) erreicht und der Betrag der Motorspannung (U) maximal den Maximalwert (Umax) für die Motorspannung (U) erreicht. Den ermittelten Stromvektor (i) gibt der Sollwertermittler (10) einer Stromregelungseinrichtung (9) als Sollwerte vor, welche eine Umrichtereinrichtung (8) entsprechend ansteuert.

FIG 2

EP 4 213 368 A1

**Beschreibung**

Gebiet der Technik

Die vorliegende Erfindung geht aus von einem Betriebsverfahren für einen fremderregten Synchronmotor, der eine Erregerwicklung und eine Motorwicklung aufweist,

- wobei ein Sollwertermittler eine momentane Drehzahl des Synchronmotors und ein von dem Synchronmotor aufzubringendes Sollmoment entgegennimmt,
- wobei der Sollwertermittler je einen Sollwert für einen der Erregerwicklung zuzuführenden Erregerstrom und einen der Motorwicklung zuzuführenden Motorstrom ermittelt,
- wobei der Sollwertermittler die ermittelten Sollwerte einer Stromregelungseinrichtung für eine Umrichtereinrichtung als Sollwerte vorgibt, so dass die Stromregelungseinrichtung die Umrichtereinrichtung so ansteuert, dass die Umrichtereinrichtung den Erregerstrom und den Motorstrom der Erregerwicklung und der Motorwicklung zuführt.

Die vorliegende Erfindung geht weiterhin aus von einem Computerprogramm für einen Sollwertermittler, wobei das Computerprogramm Maschinencode umfasst, der von dem Sollwertermittler abarbeitbar ist, wobei die Abarbeitung des Maschinencodes durch den Sollwertermittler bewirkt, dass der Sollwertermittler ein derartiges Betriebsverfahren ausführt.

Die vorliegende Erfindung geht weiterhin aus von einem Sollwertermittler zum Ermitteln von Sollwerten für einen Erregerstrom und einen Motorstrom eines fremderregten Synchronmotors, wobei der Sollwertermittler mit einem derartigen Computerprogramm programmiert ist, so dass er im Betrieb ein derartiges Betriebsverfahren ausführt.

Die vorliegende Erfindung geht weiterhin aus von einem Antrieb,

- wobei der Antrieb einen fremderregten Synchronmotor mit einer Erregerwicklung und einer Motorwicklung aufweist,
- wobei der Antrieb eine Umrichtereinrichtung aufweist, die zum Zuführen eines Erregerstroms mit der Erregerwicklung und zum Zuführen eines Motorstroms mit der Motorwicklung verbunden ist,
- wobei der Antrieb eine Stromregelungseinrichtung aufweist, welche die Umrichtereinrichtung ansteuert,
- wobei der Antrieb einen derartigen Sollwertermittler aufweist,
- wobei der Sollwertermittler Eingänge zum Entgegennehmen einer momentanen Drehzahl des Synchronmotors und eines von dem Synchronmotor aufzubringenden Sollmoments aufweist,
- wobei der Sollwertermittler zum Vorgeben eines Wertes für eine feldbildende Komponente des Motorstroms und eines Wertes für eine momentbildende Komponente des Motorstroms und eines Wertes für den Erregerstrom mit der Stromregelungseinrichtung verbunden ist.

Stand der Technik

In den letzten Jahren verzeichnete der Einsatz von fremderregten Synchronmotoren (FESM) einen starken Anstieg. Dies ist zurückzuführen auf einen hohen Wirkungsgrad über den gesamten Betriebsbereich und das hohe Drehmoment beim Anfahren. Ein weiterer Vorteil insbesondere gegenüber der permanenterregten Synchronmaschine (PESM) besteht darin, dass keine Materialien mit geringer Verfügbarkeit erforderlich sind, insbesondere keine seltenen Erden. Darüber hinaus stellt der über den Erregerstrom einstellbare magnetische Fluss des Rotors einen zusätzlichen Freiheitsgrad dar, der es erlaubt, energieeffizient und flexibel das gewünschte Drehmoment zu erreichen.

Die Regelung des Drehmomentes eines FESM geschieht im Regelfall in den feldorientierten Koordinaten. Hierfür ist eine Berechnung von Sollströmen aus der Vorgabe des zu erzielenden Drehmomentes in Abhängigkeit von den Motorparametern, den Umrichterdaten und der aktuellen Drehzahl erforderlich. Bedingungen an diese Sollströme sind insbesondere, dass ein gefordertes Drehmoment bestmöglich erreicht wird und weiterhin möglichst geringe Verluste entstehen. Die Berechnung muss innerhalb eines Regeltaktes abgeschlossen und damit echtzeitfähig sein. Physikalische Beschränkungen wie beispielsweise die maximal verfügbare Spannung der Umrichtereinrichtung und der maximale Strom im Motor müssen eingehalten und daher bei der Berechnung berücksichtigt werden.

Im Stand der Technik werden die Stromkomponenten des Motorstroms, also die feldbildende und die momentbildende Komponente, sowie der Erregerstrom teilweise unabhängig voneinander ermittelt. Das aufzubringende Sollmoment wird einem Stromfilter zugeführt, welches mittels einer Filterung einen Sollwert für die momentbildende Stromkomponente des Motorstroms (üblicherweise als q-Strom bezeichnet) ermittelt und diesen Sollwert der Stromregelungseinrichtung vorgibt. Weiterhin werden einem Feldschwächungsregler der Maximalwert der Motorspannung und die aktuelle Motorspannung zugeführt. Der Feldschwächungsregler ermittelt einerseits den Sollwert für Erregerstrom und gibt diesen Sollwert der Stromregelungseinrichtung vor. Weiterhin ermittelt der Feldschwächungsregler einen vorläufigen Sollwert für die feldbildende Komponente des Motorstroms (üblicherweise als d-Strom bezeichnet). Anhand der aktuellen Drehzahl des Synchronmotors wird unter Verwertung einer Kennlinie ein Korrekturwert für den Sollwert für die feldbildende Komponente des Motorstroms ermittelt. Der endgültige Sollwert für die feldbildende Komponente des Motorstroms wird durch Addieren dieses Korrekturwertes auf den vorläufigen Sollwert für die feldbildende Komponente des Motorstroms ermittelt. Der endgültige Sollwert für die feldbildende Komponente des Motorstroms wird wieder der Stromregelungseinrichtung vorgegeben.

Andere Ansätze für FESM beschäftigen sich zwar mit der Lösung dieses Problems. Es werden aber stets nur Teilprobleme gelöst. Weiterhin sind die Lösungen nicht echtzeitfähig. Andere Verfahren des Standes der Technik betrachten nur den Grunddrehzahlbereich (in dem ohne Feldschwächung gearbeitet werden kann) und verwenden im Feldschwächungsbereich, also für hohe Drehzahlen, Kennlinien für den Feldschwächregler. Bei diesen Verfahren werden somit Kennlinien benötigt, welche vorab aufgenommen werden müssen. Zudem werden der Motorstrom und der Erregerstrom unabhängig voneinander betrachtet, was suboptimale Lösungen erzeugt.

Ebenso ist im Stand der Technik bekannt, offline optimierte Look-Up-Tables für die Ströme zu verwenden, um einen optimalen Betriebspunkt in Abhängigkeit von der aktuellen Drehzahl und dem angeforderten Moment zu finden. Für diese Lösung ist jedoch eine sehr große Menge an Messdaten und ein gewisser Aufwand an Vorbereitung erforderlich. Die derart erstellten Look-Up-Tables für den Motorstrom und den Erregerstrom sind unflexibel zur Laufzeit und müssen bei Änderung der Maschinenparameter komplett angepasst werden. Weiterhin sind die Look-Up-Tables sehr speicherintensiv, wenn sie in hoher Genauigkeit und in Abhängigkeit von den Motorparametern verwendet werden sollen.

Zusammenfassung der Erfindung

Die Vorgehensweise des Standes der Technik führt somit nicht in allen Betriebszuständen zu einer optimalen Betriebsweise des fremderregten Synchronmotors. Insbesondere erfolgen eine Feldschwächung und hiermit korrespondierend die Ermittlung eines Korrekturwertes für den Sollwert für die feldbildende Komponente des Motorstroms in der Regel ausschließlich dann, wenn die Drehzahl des fremderregten Synchronmotors oberhalb einer Grenzdrehzahl liegt.

Für eine PESM existieren Vorgehensweisen, mittels derer die optimale Betriebsweise ermittelt werden kann. Allerdings ist die Komplexität und die Lösbarkeit der Problematik bei einer FESM erheblich größer als bei einer PESM. Dies gilt auch für die Entscheidungslogik zum Auffinden der optimalen Lösung.

Die Aufgabe der vorliegenden Erfindung besteht darin, Möglichkeiten zu schaffen, mittels derer ein fremderregter Synchronmotor in optimierter Weise betrieben werden kann. Insbesondere sollen Verluste des Synchronmotors minimiert werden. Die Lösung soll echtzeitfähig sein.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 6.

Erfindungsgemäß wird ein Betriebsverfahren für einen fremderregten Synchronmotor geschaffen, bei dem

- ein Sollwertermittler eine momentane Drehzahl des Synchronmotors und ein von dem Synchronmotor aufzubringendes Sollmoment entgegennimmt,
- dem Sollwertermittler Maximalwerte für einen der Erregerwicklung zugeführten Erregerstrom, einen der Motorwicklung zugeführten Motorstrom, eine den Motorstrom treibende Motorspannung und eine Leistung des Synchronmotors bekannt sind,
- dem Sollwertermittler weiterhin Widerstandswerte der Erregerwicklung und der Motorwicklung bekannt sind,
- der Sollwertermittler prüft, ob eine durch das Produkt der momentanen Drehzahl und des aufzubringenden Sollmoments gegebene angeforderte Leistung des Synchronmotors den Maximalwert für die Leistung übersteigt,
- der Sollwertermittler in dem Fall, dass die angeforderte Leistung den Maximalwert für die Leistung nicht übersteigt, ein erstes Optimierungsproblem für einen Stromvektor ansetzt und in Echtzeit löst und/oder in dem Fall, dass die angeforderte Leistung den Maximalwert für die Leistung übersteigt, ein zweites Optimierungsproblem für den Stromvektor ansetzt und in Echtzeit löst,
- der Stromvektor je eine Komponente für eine feldbildende Komponente des Motorstroms, eine momentbildende Komponente des Motorstroms und den Erregerstrom aufweist,
- der Sollwertermittler den Stromvektor im Rahmen der Lösung des ersten Optimierungsproblems derart ermittelt, dass in der Erregerwicklung und der Motorwicklung auftretende Verluste minimiert werden,
- wobei der Sollwertermittler im Rahmen des ersten Optimierungsproblems als ergänzende Bedingung berücksichtigt, dass ein sich aufgrund des Erregerstroms und des Motorstroms ergebendes Istmoment des Synchronmotors dem Sollmoment entspricht,
- der Sollwertermittler im Rahmen des ersten Optimierungsproblems weiterhin erste allgemeine Randbedingungen berücksichtigt, gemäß denen

-- der Betrag des Motorstroms maximal den Maximalwert für den Motorstrom erreicht,

-- der Betrag des Erregerstroms maximal den Maximalwert für den Erregerstrom erreicht und
-- der Betrag der Motorspannung maximal den Maximalwert für die Motorspannung erreicht,

- der Sollwertermittler den Stromvektor im Rahmen der Lösung des zweiten Optimierungsproblems derart ermittelt, dass das sich ergebende Istmoment des Synchronmotors maximiert wird,
- der Sollwertermittler im Rahmen des zweiten Optimierungsproblems als ergänzende Bedingung berücksichtigt, dass der Betrag der Motorspannung gleich dem Maximalwert für die Motorspannung ist,
- der Sollwertermittler im Rahmen des zweiten Optimierungsproblems weiterhin zweite allgemeine Randbedingungen berücksichtigt, gemäß denen

-- der Betrag des Motorstroms maximal den Maximalwert für den Motorstrom erreicht und
-- der Betrag des Erregerstroms maximal den Maximalwert für den Erregerstrom erreicht, und

- der Sollwertermittler die Komponenten des durch Lösen des ersten oder des zweiten Optimierungsproblems ermittelten Stromvektors einer Stromregelungseinrichtung für eine Umrichtereinrichtung als Sollwerte vorgibt, so dass die Stromregelungseinrichtung die Umrichtereinrichtung so ansteuert, dass die Umrichtereinrichtung der Erregerwicklung den Erregerstrom und der Motorwicklung den Motorstrom zuführt.

Es erfolgt also eine einheitliche Lösung für alle relevanten Ströme (feldbildende Komponente, momentbildende Komponente, Erregerstrom). Dadurch kann in jedem Betriebszustand, bei dem das aufzubringende Sollmoment erreicht werden kann, der Synchronmotor mit minimalen Verlusten betrieben werden. In jedem Betriebszustand, bei dem das aufzubringende Sollmoment nicht erreicht werden kann, kann der Synchronmotor derart betrieben werden, dass das Drehmoment des Synchronmotors so weit wie möglich dem aufzubringenden Sollmoment angenähert wird.
Die erfindungsgemäße Lösung basiert somit auf der Ermittlung des Motorstroms und des Feldstroms durch Lösen eines geeigneten Optimierungsproblems.
Das erste Optimierungsproblem ist - jedenfalls in Echtzeit und derzeit verfügbarer, massentauglicher Hardware - in seiner Allgemeinheit nicht geschlossen lösbar. Zur effizienten Lösung des ersten Optimierungsproblems ist daher vorzugsweise vorgesehen, dass der Sollwertermittler im Rahmen der Lösung des ersten Optimierungsproblems

- den Stromvektor zunächst ohne Berücksichtigung der ersten allgemeinen Randbedingungen vorläufig ermittelt,
- sodann prüft, ob der vorläufig ermittelte Stromvektor die ersten allgemeinen Randbedingungen erfüllt,
- den vorläufig ermittelten Stromvektor als Stromvektor verwendet, wenn der vorläufig ermittelte Stromvektor die ersten allgemeinen Randbedingungen erfüllt, und anderenfalls den Stromvektor unter Berücksichtigung mindestens einer der folgenden ersten speziellen Randbedingungen ermittelt, gemäß denen

-- der Betrag des Motorstroms gleich dem Maximalwert für den Motorstrom ist,
-- der Betrag des Erregerstroms gleich dem Maximalwert für den Erregerstrom ist und
-- der Betrag der Motorspannung gleich dem Maximalwert für die Motorspannung ist, und

- in Abhängigkeit davon, welche der ersten allgemeinen Randbedingungen nicht erfüllt sind, bestimmt, welche der ersten speziellen Randbedingungen er berücksichtigt.

Es erfolgt also eine Aufteilung in analytisch lösbare oder zumindest numerisch näherungsweise lösbare Teilprobleme. In den nicht analytisch lösbaren Fällen werden effiziente numerische Optimierungen verwendet, welche mit wenigen Iterationen auf den optimalen Betriebspunkt führen. Auf Basis eines Entscheidungsbaumes wird entschieden, welches der Teilprobleme tatsächlich gelöst und dessen Lösung dann verwendet wird. Durch diese Vorgehensweise kann insbesondere die Komplexität der Ermittlung deutlich reduziert werden, so dass die Echtzeitfähigkeit gewährleistet werden kann.
Vorzugsweise ist vorgesehen, dass der Sollwertermittler im Rahmen der Prüfung, ob der vorläufig ermittelte Stromvektor die ersten allgemeinen Randbedingungen erfüllt,

- zuerst prüft, ob der Betrag des Motorstroms maximal den Maximalwert für den Motorstrom erreicht und der Betrag des Erregerstroms maximal den Maximalwert für den Erregerstrom erreicht, und
- erst danach prüft, ob der Betrag der Motorspannung maximal den Maximalwert für die Motorspannung erreicht.

Diese Vorgehensweise führt mittels eines einfachen, leicht abzuarbeiten Entscheidungsbaums schnell zur korrekten Lösung, also dem Stromvektor.
Zur effizienten Lösung des zweiten Optimierungsproblems ist vorzugsweise vorgesehen, dass der Sollwertermittler im Rahmen der Lösung des zweiten Optimierungsproblems

- den Stromvektor zunächst ohne Berücksichtigung der zweiten allgemeinen Randbedingungen vorläufig ermittelt,
- sodann prüft, ob der vorläufig ermittelte Stromvektor die zweiten allgemeinen Randbedingungen erfüllt,
- den vorläufig ermittelten Stromvektor als Stromvektor verwendet, wenn der vorläufig ermittelte Stromvektor die zweiten allgemeinen Randbedingungen erfüllt, und anderenfalls den Stromvektor unter Berücksichtigung mindestens einer der folgenden zweiten speziellen Randbedingungen ermittelt, gemäß denen

  -- der Betrag des Motorstroms gleich dem Maximalwert für den Motorstrom ist und
  -- der Betrag des Erregerstroms gleich dem Maximalwert für den Erregerstrom ist, und

- in Abhängigkeit davon, welche der zweiten allgemeinen Randbedingungen nicht erfüllt sind, bestimmt, welche der zweiten speziellen Randbedingungen er berücksichtigt.

Dadurch kann insbesondere die Komplexität der Ermittlung deutlich reduziert werden, so dass die Echtzeitfähigkeit gewährleistet werden kann.

Vorzugsweise ist vorgesehen, dass der Sollwertermittler im Rahmen der Prüfung, ob der vorläufig ermittelte Stromvektor die zweiten allgemeinen Randbedingungen erfüllt,

- zuerst prüft, ob der Betrag des Motorstroms maximal den Maximalwert für den Motorstrom erreicht, und
- erst danach prüft, ob der Betrag des Erregerstroms maximal den Maximalwert für den Erregerstrom erreicht.

Diese Vorgehensweise führt mittels eines einfachen, leicht abzuarbeiten Entscheidungsbaums schnell zur korrekten Lösung, also dem Stromvektor.

Vorzugsweise berücksichtigt der Sollwertermittler als Verluste nur die Kupferverluste. Die Beschränkung auf die Kupferverluste stellt zwar eine Vereinfachung dar. Diese Vereinfachung ist jedoch gerechtfertigt, da die Kupferverluste den Großteil der Gesamtverluste ausmachen (mindestens 70 %, oftmals sogar 80 % und mehr) und weiterhin der Synchronmotor zumeist Grunddrehzahlbereich betrieben wird, in dem die Kupferverluste in besonders starkem Umfang dominant gegenüber den Eisenverlusten sind.

Die Aufgabe wird weiterhin durch ein Computerprogramm mit den Merkmalen des Anspruchs 7 gelöst. Erfindungsgemäß bewirkt die Abarbeitung des Computerprogramms durch den Sollwertermittler, dass der Sollwertermittler ein erfindungsgemäßes Betriebsverfahren ausführt.

Die Aufgabe wird weiterhin durch einen Sollwertermittler mit den Merkmalen des Anspruchs 8 gelöst. Erfindungsgemäß ist der Sollwertermittler mit einem erfindungsgemäßen Computerprogramm programmiert, so dass der Sollwertermittler im Betrieb ein erfindungsgemäßes Betriebsverfahren ausführt.

Die Aufgabe wird weiterhin durch einen Antrieb mit den Merkmalen des Anspruchs 9 gelöst. Erfindungsgemäß ist bei einem Antrieb der eingangs genannten Art der Sollwertermittler als erfindungsgemäßer Sollwertermittler ausgebildet.

Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1    einen Antrieb,
FIG 2    ein Ablaufdiagramm,
FIG 3    ein erstes Optimierungsproblem,
FIG 4    ein Ablaufdiagramm,
FIG 5    ein zweites Optimierungsproblem und
FIG 6    ein Ablaufdiagramm.

Beschreibung der Ausführungsformen

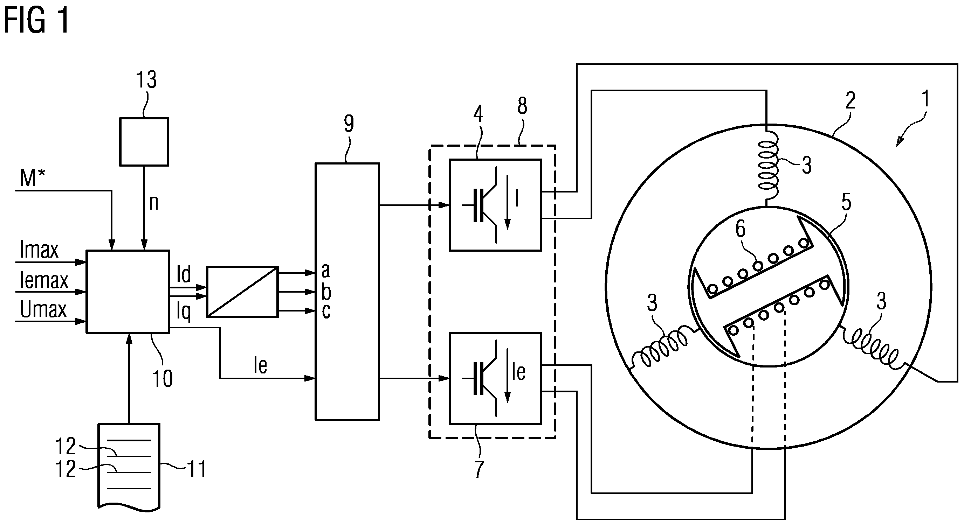

Gemäß FIG 1 weist ein Antrieb einen fremderregten Synchronmotor 1 auf. Der Synchronmotor 1 weist einen Stator 2 mit einer darin angeordneten Motorwicklung 3 auf. Der Motorwicklung 3 wird über einen Umrichter 4 ein Motorstrom I zugeführt. Die Motorwicklung 3 ist in der Regel als Drehstromwicklung ausgeführt. Der Motorstrom I umfasst daher die Phasen a, b, c eines Drehstromsystems. Der Synchronmotor 1 weist weiterhin einen Rotor 5 mit einer mit rotierenden Erregerwicklung 6 auf. Der Erregerwicklung 6 wird über einen weiteren Umrichter 7 ein Erregerstrom Ie zugeführt. Der Erregerstrom Ie ist in der Regel ein Gleichstrom. Der Umrichter 4 und der Umrichter 7 bilden zusammen eine Umrichtereinrichtung 8. Die Umrichtereinrichtung 8 wird von einer Stromregelungseinrichtung 9 angesteuert.

Der Antrieb weist weiterhin einen Sollwertermittler 10 auf. Der Sollwertermittler 10 gibt der Stromregelungseinrichtung 9 als Sollwerte eine feldbildende Komponente Id und eine momentbildende Komponente Iq des Motorstroms I und den Erregerstrom Ie vor. Die feldbildende Komponente Id und die momentbildende Komponente Iq bilden zusammen den Sollwert für den Motorstrom I. Die beiden Komponenten Id, Iq sind örtlich um 90° gegeneinander gedreht. Der Motorstrom I ist also, soweit es die interne Handhabung des Motorstroms I im Sollwertermittler 10 und die Vorgabe der Sollwerte an die Stromregelungseinrichtung 9 betrifft, eine Vektorgröße, wobei im (mitrotierenden) dq-System die Be-ziehung

$$Id^2 + Iq^2 = |I|^2 \qquad\qquad (1)$$

gilt.

Aufgrund der Vorgabe der genannten Sollwerte Id, Iq und Ie ist die Stromregelungseinrichtung 9 in der Lage, die Umrichtereinrichtung 8 so anzusteuern, dass der Umrichter 7 der Erregerwicklung 6 den Erregerstrom Ie und der Umrichter 4 der Motorwicklung 3 den Motorstrom I zuführt. Die Umrechnung vom mitrotierenden dq-System in das abc-System ist Fachleuten geläufig und muss nicht näher erläutert werden.

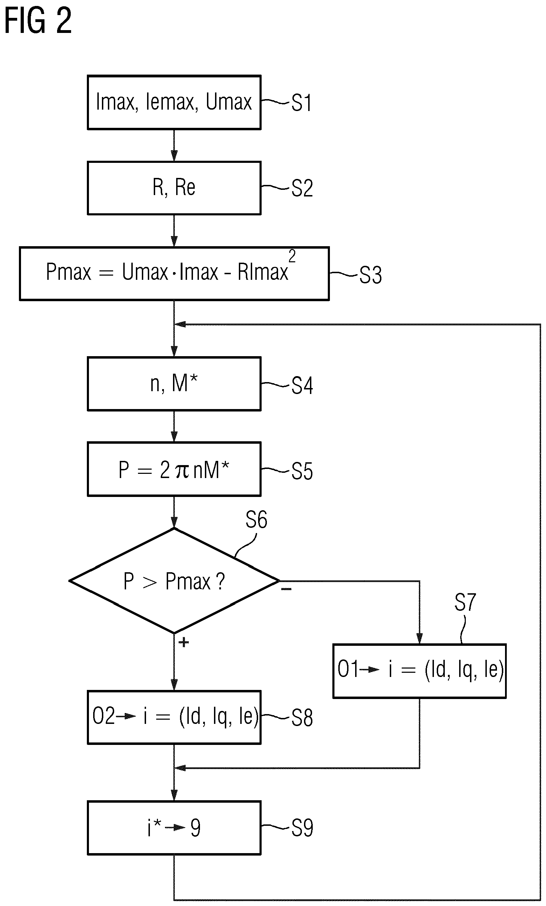

Der Sollwertermittler 10 ist der eigentliche Kerngegenstand der vorliegenden Erfindung. Der Sollwertermittler 10 ist mit einem Computerprogramm 11 programmiert. Das Computerprogramm 11 umfasst Maschinencode 12, der von dem Sollwertermittler 10 abarbeitbar ist. Aufgrund der Abarbeitung des Maschinencodes 12 durch den Sollwertermittler 10 führt der Sollwertermittler 10 ein Betriebsverfahren aus, das nachstehend zunächst in Verbindung mit FIG 2, danach unter zusätzlicher Bezugnahme auf die weiteren FIG, näher erläutert wird.

Gemäß FIG 2 werden dem Sollwertermittler 10 in einem Schritt S1 Werte Imax, Iemax und Umax bekannt. Die genannten Werte Imax, Iemax und Umax können beispielsweise durch das Computerprogramm 11 bestimmt sein oder bei der Inbetriebsetzung des Antriebs einmalig festgelegt werden. Gegebenenfalls können sie auch dynamisch in Abhängigkeit von einem Zustand des Antriebs bestimmt werden, beispielsweise in Abhängigkeit von der Betriebstemperatur des Synchronmotors 1.

Der Wert Imax ist der Maximalwert für den Betrag des Motorstroms I. Der Wert Iemax ist der Maximalwert für den Betrag des Erregerstroms Ie. Der Wert Umax ist der Maximalwert für den Betrag einer den Motorstrom I treibenden Motorspannung U. Der Maximalwert Umax für die Motorspannung U kann beispielsweise durch die Versorgungsspannung des Umrichters 4 bestimmt sein, beispielsweise eine eingangsseitig des Umrichters 4 anstehende Zwischenkreisspannung.

Die Motorspannung U weist im mitrotierenden dq-System - analog zum Motorstrom I - ebenfalls d- und eine q-Komponente auf, nachfolgend als feldbildende und momentbildende Spannungskomponenten Ud und Uq bezeichnet. Analog zum Motorstrom I gilt die Beziehung

$$Ud^2 + Uq^2 = |U|^2 \qquad\qquad (2)$$

Dem Sollwertermittler 10 werden weiterhin in einem Schritt S2 der Widerstand R der Motorwicklung 3 und der Widerstand Re der Erregerwicklung 6 bekannt. Die Werte R, Re können ebenfalls durch das Computerprogramm 11 bestimmt sein oder bei der Inbetriebsetzung des Antriebs einmalig festgelegt werden.

Basierend auf den nunmehr gegebenen Größen können die Komponenten Ud, Uq der Motorspannung U und eine Erregerspannung Ue und die Komponenten Id, Iq des Motorstroms I und der Erregerstrom Ie miteinander in Beziehung gesetzt werden. Denn im stationären Betriebsfall gilt in guter Näherung

$$Ud = R \cdot Id - \omega \cdot Lq \cdot Iq \qquad\qquad (3)$$

$$Uq = R \cdot Iq + \omega \cdot (Ld \cdot Id + Lm \cdot Ie) \qquad\qquad (4)$$

$$Ue = \mathrm{Re} \cdot Ie \qquad\qquad (5)$$

In den Gleichungen 3 bis 5 ist ω die elektrische Kreisfrequenz. Ld und Lq sind die Selbstinduktivitäten der Motorwicklung 3 in der d- und der q-Achse. Lm ist die Gegeninduktivität der Erregerwicklung 6.

Aus Gleichung 5 ist indirekt auch ersichtlich, dass die maximale Erregerspannung Ue nicht explizit berücksichtigt werden muss, da sie in einer linearen Beziehung zum Erregerstrom Ie steht. Der Maximalwert Iemax kann daher derart bestimmt sein, dass er mit der früher eintretenden Limitierung (Erregerstrom Ie oder Erregerspannung Ue) korrespondiert.

In den Gleichungen 3 bis 5 sind Einflüsse unberücksichtigt, die sich aufgrund einer zeitlichen Änderung des Motorstroms I und des Erregerstroms Ie ergeben. Dies ist zulässig, da diese Änderungen und die dadurch bewirkten Einflüsse klein sind. Weiterhin wird in den Gleichungen 3 bis 5 angenommen, dass die Widerstände R, Re zeitlich konstant sind. Eine etwaige Temperaturabhängigkeit oder auch eine Abhängigkeit von einem anderen Zustand des Antriebs kann jedoch problemlos mit berücksichtigt werden.

Die Selbstinduktivitäten Ld und Lq der Motorwicklung 3 und auch die Gegeninduktivität Lm der Erregerwicklung 6 sind von den Komponenten Id, Iq des Motorstroms I und dem Erregerstrom Ie abhängig. Soweit erforderlich, können die konkreten Werte für die Selbstinduktivitäten Ld und Lq der Motorwicklung 3 und die Gegeninduktivität Lm der Erregerwicklung 6 innerhalb des Sollwertermittlers 10 in Lookup-Tables hinterlegt sein.

Dem Sollwertermittler 10 wird weiterhin ein Maximalwert Pmax für eine Leistung P des Synchronmotors 1 bekannt. Es ist möglich, dass der Maximalwert Pmax für die Leistung P des Synchronmotors 1 dem Sollwertermittler 10 explizit vorgegeben wird. Alternativ ist es möglich, dass der Sollwertermittler 10 in einem Schritt S3 den Maximalwert Pmax selbst gemäß der Beziehung

$$P\max = U\max \cdot \text{Im}\,ax - R \cdot \text{Im}\,ax^2 \qquad (6)$$

ermittelt.

In einem Schritt S4 nimmt der Sollwertermittler 10 eine momentane (mechanische) Drehzahl n des Synchronmotors 1 und ein von dem Synchronmotor 1 aufzubringendes Sollmoment M* entgegen. Die Art und Weise der Vorgabe des Sollmoments M* kann beliebiger Natur sein. Sie ist als solche nicht Gegenstand der vorliegenden Erfindung. Auch die Art und Weise der Vorgabe der momentanen Drehzahl n ist als solche nicht Gegenstand der vorliegenden Erfindung. Beispielsweise kann der Antrieb einen Ermittlungsblock 13 aufweisen, der die Drehzahl n anhand des tatsächlichen Betriebszustands des Synchronmotors 1 ermittelt. Alternativ kann anstelle der Drehzahl n die elektrische Kreisfrequenz ω ermittelt und daraus die Drehzahl n berechnet werden. Entsprechende Vorgehensweisen zur Ermittlung der elektrischen Kreisfrequenz ω und auch die Berechnung der Drehzahl n aus der elektrischen Kreisfrequenz ω sind Fachleuten allgemein bekannt. Weiterhin wird nachfolgend angenommen, dass das Sollmoment M* einen positiven Wert aufweist. Ein negativer Wert für das Sollmoment M* würde lediglich Vorzeichen beeinflussen, die Beträge für die feldbildende Komponente Id, die momentbildende Komponente Iq und den Erregerstrom Ie würden sich hingegen nicht ändern.

In einem Schritt S5 ermittelt der Sollwertermittler eine momentan angeforderte Leistung P des Synchronmotors 1. Die momentan angeforderte Leistung P des Synchronmotors 1 ist durch das Produkt der momentanen Drehzahl n und des aufzubringenden Sollmoments M* gegeben.

In einem Schritt S6 prüft der Sollwertermittler 10, ob die momentan angeforderte Leistung P den Maximalwert Pmax übersteigt. Übersteigt die angeforderte Leistung P den Maximalwert Pmax nicht, geht der Sollwertermittler 10 zu einem Schritt S7 über. Im Schritt S7 setzt der Sollwertermittler 10 ein erstes Optimierungsproblem O1 für einen Stromvektor i an und löst es in Echtzeit. Übersteigt die angeforderte Leistung P hingegen den Maximalwert Pmax, geht der Sollwertermittler 10 zu einem Schritt S8 über. Im Schritt S8 setzt der Sollwertermittler 10 ein zweites Optimierungsproblem O2 für den Stromvektor i an und löst es in Echtzeit.

Der Stromvektor i umfasst drei Komponenten, nämlich die feldbildende Komponente Id und die momentbildende Komponente Iq des Motorstroms I und den Erregerstrom Ie. Die Lösung des ersten bzw. zweiten Optimierungsproblems O1, O2 sind somit die Werte, welche der Sollwertermittler 10 der Stromregelungseinrichtung 9 als Sollwerte vorgibt. Diese Vorgabe erfolgt im Schritt S9.

Es ist möglich, die Vorgehensweise von FIG 2 dahingehend zu ergänzen, dass der Sollwertermittler 10 in dem Fall, dass er das zweite Optimierungsproblem O2 löst, eine Meldung an eine übergeordnete Einrichtung (nicht dargestellt) ausgibt. Dadurch kann die übergeordnete Einrichtung darüber informiert werden, dass das angeforderte Sollmoment M* nicht bereitgestellt werden kann.

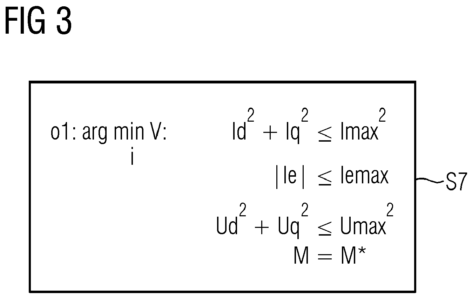

Im Rahmen der Lösung des ersten Optimierungsproblems O1 ermittelt der Sollwertermittler 10 gemäß FIG 3 den Stromvektor i derart, dass auftretende Verluste V minimiert werden. Im Rahmen der vorliegenden Erfindung werden nur die in der Erregerwicklung 6 und der Motorwicklung 3 auftretenden Kupferverluste VK berücksichtigt. Die übrigen Verluste - insbesondere die Eisenverluste - können vernachlässigt werden, da in der Praxis die Kupferverluste VK erheblich größer als die übrigen Verluste sind.

Die Kupferverluste VK können in guter Näherung in Form der Beziehung

$$VK = \frac{3}{2} \cdot R \cdot \left(Id^2 + Iq^2\right) + \mathrm{Re} \cdot Ie^2 \qquad (7)$$

angesetzt werden. Im Rahmen des ersten Optimierungsproblems O1 berücksichtigt der Sollwertermittler 10 als ergänzende Bedingung die grundsätzliche Voraussetzung des ersten Optimierungsproblems O1, dass ein Istmoment M des Synchronmotors 1 dem Sollmoment M* entspricht. Das Istmoment M ist durch den Erregerstrom Ie und die Komponenten Iq, Id des Motorstroms I bestimmt. Es ergibt sich in guter Näherung zu

$$M = \frac{3}{2} Z \cdot \left(Lm \cdot Ie + \left(Ld - Lq\right) \cdot Id\right) \cdot Iq \qquad (8)$$

Z ist die Polpaarzahl der Synchronmaschine 1.

Weiterhin berücksichtigt der Sollwertermittler 10 im Rahmen des ersten Optimierungsproblems O1 erste allgemeine Randbedingungen. Gemäß diesen Randbedingungen ist gefordert, dass

- der Betrag des Motorstroms I maximal den Maximalwert Imax für den Motorstrom I erreicht,
- der Betrag des Erregerstroms Ie maximal den Maximalwert Iemax für den Erregerstrom Ie erreicht und
- der Betrag der Motorspannung U maximal den Maximalwert Umax für die Motorspannung U erreicht.

Mathematisch lässt sich das erste Optimierungsproblem O1 also wie folgt formulieren:

$$i = \arg\min_i V \qquad (9)$$

unter Berücksichtigung von

$$Id^2 + Iq^2 \leq \mathrm{Im}\, ax^2 \qquad (10)$$

$$|Ie| \leq Ie\max \qquad (11)$$

$$Ud^2 + Uq^2 \leq U\max^2 \qquad (12)$$

$$M = M* \qquad (13)$$

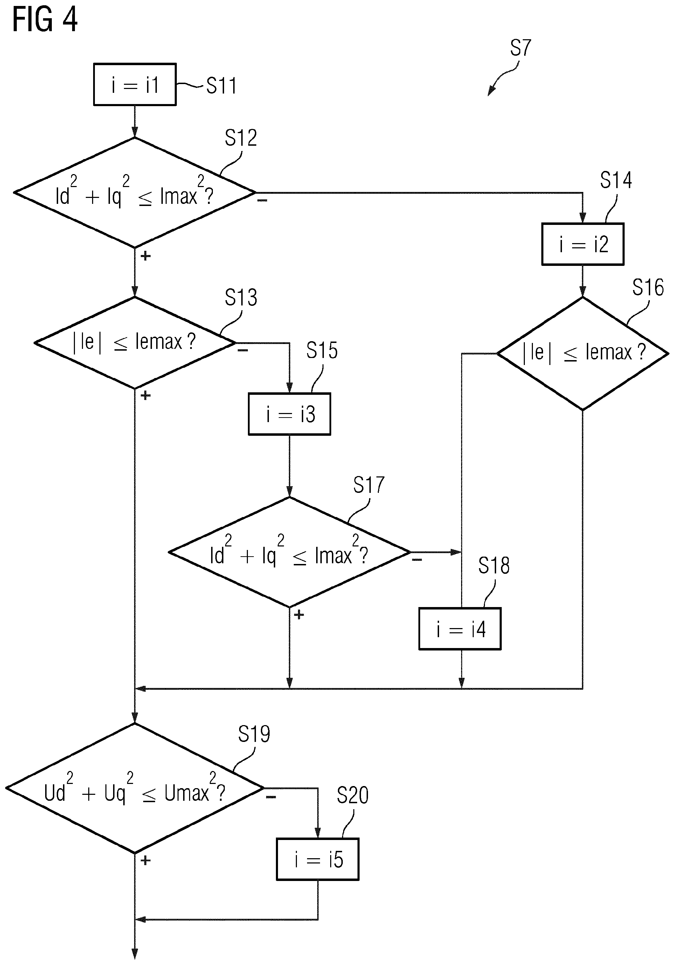

Das Lösen des ersten Optimierungsproblems O1 ist keine triviale Aufgabe, da das Istmoment M in komplexer Weise von den Komponenten des Stromvektors i abhängt und darüber hinaus die nichtlinearen Beschränkungen gemäß den Ungleichungen 10 bis 12 berücksichtigt werden müssen. Die genaue Vorgehensweise zum Lösen des ersten Optimierungsproblems O1 wird nachstehend in Verbindung mit FIG 4 näher erläutert.

FIG 4 zeigt die konkrete Vorgehensweise, mittels derer der Sollwertermittler 10 im Rahmen der Lösung des ersten Optimierungsproblems O1 den Stromvektor i ermittelt.

Gemäß FIG 4 ermittelt der Sollwertermittler 10 zunächst in einem Schritt S11 den Stromvektor i=i1. Den Stromvektor i1 ermittelt der Sollwertermittler 10 ohne Berücksichtigung der ersten allgemeinen Randbedingungen. Er löst also zwar das erste Optimierungsproblem O1 gemäß Gleichung 9 unter Berücksichtigung von Gleichung 13. Er löst das Optimierungsproblem O1 jedoch, ohne zugleich auch die Ungleichungen 10 bis 12 zu berücksichtigen.

Der Schritt S11 kann in der Praxis beispielsweise durch einen Lagrange-Ansatz exakt analytisch gelöst werden. Diese Lösung ist aus der Literatur bekannt. Rein beispielhaft kann auf den Fachaufsatz "Optimal current control of externally excited synchronous machines in automotive traction drive applications" von O. Haala, B. Wagner, M. Hofmann und M. Marz, veröffentlicht im International Journal of Electrical and Computer Engineering, Band 7 (2013), Seiten 1133 bis 1139 verwiesen werden. Auch kann das Fachbuch "Elektrische Antriebe: Regelung von Antriebssystemen" von D. Schroder, Springer-Verlag, 2009 genannt werden. Die Lösung ist unabhängig von der Drehzahl n bzw. der elektrischen Kreisfrequenz ω. Sie ist in Fachkreisen unter der Bezeichnung Maximum Torque Per Current (MTPC) bekannt.

Die im Schritt S11 ermittelte Lösung ist nur vorläufig. Bevor der Sollwertermittler 10 den Stromvektor i=i1 als endgültigen Stromvektor i übernimmt, prüft der Sollwertermittler 10 zunächst in einem Schritt S12, ob der Betrag des Motorstroms I maximal den Maximalwert Imax für den Motorstrom I erreicht. Wenn diese Bedingung erfüllt ist, prüft der Sollwertermittler 10 sodann in einem Schritt S13, ob der Betrag des Erregerstroms Ie maximal den Maximalwert Iemax für den Erregerstrom Ie erreicht.

Wenn bereits die Prüfung des Schrittes S12 negativ verläuft, für den Stromvektor i1 also der Betrag des Motorstroms I größer als der Maximalwert Imax für den Motorstrom I ist, ermittelt der Sollwertermittler 10 in einem Schritt S14 den Stromvektor i=i2. Den Stromvektor i2 ermittelt der Sollwertermittler 10 wie zuvor durch Lösen von Gleichung 9 unter Berücksichtigung von Gleichung 13. Er löst Gleichung 9 jedoch, wobei er zusätzlich auch die erste spezielle Randbedingung

$$Id^2 + Iq^2 = \mathrm{Im}ax^2 \qquad\qquad (14)$$

berücksichtigt. Aufgrund dieser Randbedingung kann der im Rahmen von Gleichung 9 zu minimierende Term deutlich vereinfacht werden. Denn der Anteil $R(Id^2+Iq^2)$ ist aufgrund von Gleichung 14 eine Konstante, die den Wert $RImax^2$ aufweist und daher im Rahmen der Minimierung vernachlässigt werden kann. In der Folge kann auch der Widerstand Re vernachlässigt werden, da er nur einen konstanten Faktor darstellt. Anstelle der Minimierung der (vollständigen) Kupferverluste VK ist es daher ausreichend, den Term $Ie^2$ zu minimieren. Genau genommen reicht es sogar aus, den Betrag des Erregerstroms Ie zu minimieren. Weiterhin kann aufgrund von Gleichung 14 der Betrag der momentbildenden Komponente Iq anhand des Wertes der feldbildenden Komponente Id ermittelt werden, so dass im Ergebnis eine Variable weniger variiert werden muss. Der Schritt S14 kann in der Praxis ebenfalls durch einen Lagrange-Ansatz analytisch gelöst werden.

Besteht der Stromvektor i zwar die Prüfung des Schrittes S12, aber nicht die Prüfung des Schrittes S13, ermittelt der Sollwertermittler 10 in einem Schritt S15 den Stromvektor i=i3. Der Sollwertermittler 10 ermittelt den Stromvektor i3 wie zuvor durch Lösen von Gleichung 9 unter Berücksichtigung von Gleichung 13. Er löst Gleichung 9 jedoch, wobei er zusätzlich die erste spezielle Randbedingung

$$|Ie| = Ie\max \qquad\qquad (15)$$

berücksichtigt.

Der Schritt S15 besitzt als Lösung die MTPC-Trajektorie einer permanenterregten Synchronmaschine. Diese Lösung ist aus der Literatur bekannt. Rein beispielhaft kann auf den Fachaufsatz "Analytical solutions for the optimal reference currents for MTPC/MTPA, MTPV and MTPF control of anisotropic synchronous machines" von H. Eldeeb, C. M. Hackl, J. Kullick, and L. Horlbeck, veröffentlicht in Proc. 2017 IEEE International Electric Machines and Drives Conference (IEMDC), 2017, Seiten 1 bis 6 verwiesen werden. Auch kann auf den Fachaufsatz "Optimal setpoint computation for constrained torque control of PMSMs" von T. Englert und K. Graichen, veröffentlicht in Proc. 2018 European Control Conference (ECC), 2018, Seiten 2671 bis 2677 verwiesen werden.

Analog zur Vorgehensweise bei der Ermittlung des Stromvektors i=i2 kann auch bei der Ermittlung des Stromvektors i=i3 der im Rahmen von Gleichung 9 zu minimierende Term deutlich vereinfacht werden. Denn der Anteil $ReIe^2$ ist aufgrund von Gleichung 15 eine Konstante, die den Wert $ReIemax^2$ aufweist und daher im Rahmen der Minimierung vernachlässigt werden kann. In der Folge kann auch der Faktor 3R/2 vernachlässigt werden, da er nur einen konstanten Faktor darstellt. Anstelle der Minimierung der (vollständigen) Kupferverluste VK ist es daher ausreichend, den Term $Id^2+Iq^2$ zu minimieren. Weiterhin muss aufgrund von Gleichung 15 eine Variable weniger variiert werden muss. Denn der Betrag des Erregerstroms Ie steht fest. Der Erregerstrom Ie kann somit lediglich die Werte +Iemax oder -Iemax aufweisen.

Auch die Stromvektoren i=i2 und i=i3 der Schritte S14 und S15 sind nur vorläufig. Bevor der Sollwertermittler 10 den Stromvektor i=i2 bzw. den Stromvektor i=i3 als endgültigen Stromvektor i übernimmt, prüft der Sollwertermittler 10 in Schritten S16 bzw. S17, ob die jeweils verbleibende Strombedingung erfüllt ist, ob also im Falle des Stromvektors i=i2 Ungleichung 11 erfüllt ist bzw. im Falle des Stromvektors i=i3 und Gleichung 10 erfüllt ist. Erfüllt im einen Fall der Stromvektor i=i2 Ungleichung 11 nicht bzw. im anderen Fall der Stromvektor i=i3 und Gleichung 10 nicht, ermittelt der Sollwertermittler 10 in einem Schritt S18 den Stromvektor i=i4. Den Stromvektor i4 ermittelt der Sollwertermittler 10 wie zuvor durch Lösen von Gleichung 9 unter Berücksichtigung von Gleichung 13. Er löst Gleichung 9 jedoch, wobei er gleichzeitig die Bedingungen gemäß Gleichung 14 und Gleichung 15 berücksichtigt.

Die Lösung des Schrittes S18 ist (nahezu) trivial, da im Ergebnis nur die feldbildende Komponente Id variiert werden muss. Die momentbildende Komponente Iq ist dadurch - bis auf ihr Vorzeichen - festgelegt. Ebenso ist auch der Erregerstrom Ie bis auf sein Vorzeichen festgelegt.

Es sind auch Alternativen zur Ausgestaltung der Schritte S11 bis S18 möglich. Insbesondere ist es möglich, die Prüfungen der Schritte S12 und S13 in umgekehrter Reihenfolge auszuführen und damit vorrangig nicht den Stromvektor i=i2, sondern den Stromvektor i=i3 zu ermitteln. Noch besser ist eine Vorgehensweise, bei welcher die Prüfungen der Schritte S12 und S13 kombiniert sind. Besteht im Rahmen dieser Ausgestaltung der Stromvektor i=i1 auch nur eine der beiden Prüfungen nicht, ermittelt der Sollwertermittler 10 die beiden Stromvektoren i=i2 und i=i3 und prüft für beide Stromvektoren i=i2 und i=i3, ob sie die jeweils andere Prüfung bestehen. Der Sollwertermittler 10 prüft also, ob der Stromvektor i=i2 die Bedingung von Ungleichung 11 erfüllt und der Stromvektor i=i3 die Bedingung von Ungleichung 10 erfüllt. Bestehen sowohl der Stromvektor i=i2 als auch der Stromvektor i=i3 ihre jeweilige Prüfung, wählt der Sollwertermittler 10 als Stromvektor i denjenigen der beiden Stromvektoren i=i2 und i=i3 aus, der die geringeren Kupferverluste VK aufweist. Besteht nur einer der beiden Stromvektoren i=i2 und i=i3 seine Prüfung, während der andere der beiden Stromvektoren i=i2 und i=i3 seine Prüfung nicht besteht, wählt der Sollwertermittler 10 als Stromvektor i denjenigen der beiden Stromvektoren i=i2 und i=i3 aus, der seine Prüfung besteht. Bestehen beide Stromvektoren i=i2 und i=i3 ihre jeweilige Prüfung nicht, fährt der Sollwertermittler 10 mit der Ermittlung des Stromvektors i=i4 fort.

Der nunmehr ermittelte Stromvektor i erfüllt - unabhängig davon, ob es sich um den Stromvektor i1, i2, i3 oder i4 handelt - die Stromlimitierungen der Ungleichungen 10 und 11. Es ist jedoch noch nicht gewährleistet, dass auch die Spannungslimitierung gemäß und Gleichung 12 erfüllt ist. Der Sollwertermittler 10 prüft daher für den ermittelten Stromvektor i in einem Schritt S19, ob er die Bedingung gemäß Ungleichung 12 erfüllt. Der Sollwertermittler 10 prüft also, ob der Betrag der Motorspannung U maximal den Maximalwert Umax für die Motorspannung U erreicht.

Besteht der Stromvektor i die Prüfung des Schrittes S19, verwendet der Sollwertermittler 10 den durch die Abarbeitung der Schritte S11 bis S18 ermittelten Stromvektor i. Anderenfalls ermittelt der Sollwertermittler 10 in einem Schritt S20 den Stromvektor i=i5. Den Stromvektor i5 ermittelt der Sollwertermittler 10 wie zuvor durch Lösen von Gleichung 9 unter Berücksichtigung von Gleichung 13. Er löst Gleichung 9 jedoch, wobei er gleichzeitig die Bedingung

$$Ud^2 + Uq^2 = U\max{}^2 \qquad (16)$$

berücksichtigt.

Für die Ermittlung des Stromvektors i=i5 kann es erforderlich sein, den Stromvektor i=i5 numerisch zu berechnen. Hierfür stehen dem Fachmann verschiedene Ermittlungsverfahren zur Verfügung.

So ist es beispielsweise möglich, den Stromvektor i=i5 mittels Gradientenverfahren mit Liniensuchverfahren oder mehrdimensionalen Newtonverfahren zu lösen. Bei diesen Verfahren besteht jedoch die Gefahr, dass sie zu viel Zeit benötigen. Aufgrund der Struktur des Optimierungsproblems für den Stromvektor i=i5 können jedoch analytische Teillösungen bestimmt werden und somit sehr effiziente numerische Verfahren hergeleitet werden.

Ein Beispiel eines derartigen Verfahrens ist die Fixpunktiteration für den Erregerstrom Ie. In diesem Fall werden die notwendigen Optimalitätsbedingungen erster Ordnung des Optimierungsproblems über den Lagrange-Ansatz

$$La(i, \lambda1, \lambda2) = i^T \cdot R' \cdot i + \lambda1 \cdot (i^T \cdot M' \cdot i - M^*) + \lambda2 \cdot (i^T \cdot U' \cdot i - U\max{}^2) \qquad (17)$$

bestimmt werden. La ist die Lagrangefunktion. $\lambda1$ und $\lambda2$ sind Lagrange-Multiplikatoren. R', M' und U' sind 3x3-Matrizen, welche anhand der Widerstände R, Re, des generierten Moments M und der Spannungskomponenten Ud und Uq sowie der Erregerspannung Ue in Verbindung mit den zu beachtenden Randbedingungen (Gleichungen 13 und 16) ermittelt werden können. Der Gradient

$$\frac{\partial La(i, \lambda1, \lambda2)}{\partial} = 2(R' + \lambda1 \cdot M' + \lambda2 \cdot U') \cdot i \qquad (18)$$

muss im Minimum die Bedingung

$$(R' + \lambda1 \cdot M' + \lambda2 \cdot U') \cdot i = 0 \qquad (19)$$

erfüllen. Diese Bedingung kann genutzt werden, um den Erregerstrom Ie und die Lagrange-Multiplikatoren $\lambda1$ und $\lambda2$ in Abhängigkeit von den Komponenten Id, Iq des Motorstroms I zu berechnen. Konkret existiert die Funktion

$$Ie = f_{Ie}(Id, Iq) . \qquad (20)$$

Die Lösung dieser Funktion hängt nicht von den Lagrange-Multiplikatoren λ1 und λ2 ab.

In analoger Weise kann dies auf die Randbedingungen für das Drehmoment M (Gleichung 13) und der Motorspannung U (Gleichung 16) angewendet werden. Die feldbildende Komponente Id und die momentbildende Komponente Iq des Motorstroms I können in Abhängigkeit von dem Erregerstrom Ie als Funktionen

$$Id = f_{Id}(Ie) \tag{21}$$

und

$$Iq = f_{Iq}(Ie) \tag{22}$$

berechnet werden.

Basierend auf den Funktionen $f_{Ie}$, $f_{Id}$ und $f_{Iq}$ kann ein iteratives Lösungsverfahren in Form einer Fixpunktiteration

$$Ie(k+1) = f_{Ie}(f_{Id}(Ie(k)), f_{Iq}(Ie(k))) \tag{23}$$

aufgestellt werden, wobei k der jeweilige Iterationsschritt ist. Der Fixpunkt der Iterationsvorschrift ist anschließend der optimale Stromvektor i=i5, und die Lagrange-Multiplikatoren λ1 und λ2 können analytisch berechnet werden.

Die Iteration wird zu einem geeigneten Zeitpunkt abgebrochen, um die Echtzeitfähigkeit zu garantieren. Das Abbruchkriterium kann beispielsweise darin bestehen, dass eine maximale Anzahl von Iterationen vorgenommen wird oder dass sich das Ergebnis nur noch marginal ändert. Durch Verwendung eines geeigneten initialen Ansatzes ergibt sich die tatsächliche Lösung in sehr wenigen Iterationsschritten. Der initiale Ansatz kann beispielsweise der Erregerstrom Ie sein, der von dem Sollwertermittler 10 zuletzt an die Stromregelungseinrichtung 9 ausgegeben wurde. Es kommen aber auch andere Ansätze in Frage.

Alternativ kann ein eindimensionales Verfahren zur Bestimmung einer Nullstelle einer Funktion verwendet werden. Diese Verfahren sind sehr effizient. In diesem Fall wird davon ausgegangen, dass Gleichung 19 eine nichttriviale Lösung besitzen muss. Demzufolge muss die Matrix

$$R' + \lambda 1 \cdot M' + \lambda 2 \cdot U' \tag{24}$$

einen Kern besitzen, und die Determinante der Matrix muss den Wert 0 aufweisen. Damit kann der Ausdruck 24 nach λ1 oder λ2 aufgelöst werden. Beispielsweise kann λ1 in Abhängigkeit von λ2 dargestellt werden. Hieraus ergeben sich die Lösungen für den optimalen Stromvektor i=i5, denn der Stromvektor i=i5 muss der Kern der Matrix sein, damit die Gradientengleichung erfüllt ist. Es muss also gelten

$$\ker n(R' + \lambda 1 \cdot M' + \lambda 2 \cdot U') = IL \cdot i(\lambda 2) \,. \tag{25}$$

Hierbei ist i(λ2) ein Stromvektor der Länge 1, der somit die "Richtung" des Stromvektors i=i5 bestimmt, also das Verhältnis der drei Komponenten des Stromvektors i=i5. Die Länge IL wird über die Bedingungen der Gleichungen 13 und 16 bestimmt. Denn es muss gelten

$$IL^2 \cdot i(\lambda 2)^T \cdot R' \cdot i(\lambda 2) = M* \tag{26}$$

und

$$IL^2 \cdot i(\lambda 2)^T \cdot U' \cdot i(\lambda 2) = U\max^2 \tag{27}$$

Durch Auflösen der Gleichungen 26 und 27 nach $IL^2$ und Gleichsetzen ergibt sich folglich die Gleichung

$$U\max^2 \cdot i(\lambda 2)^T \cdot M' \cdot i(\lambda 2) - M* \cdot i(\lambda 2)^T \cdot U' \cdot i(\lambda 2) = 0 \,. \tag{28}$$

In Gleichung 28 ist ausschließlich A2 unbekannt. Gleichung 28 kann daher vom Ansatz her nach λ2 aufgelöst werden. Allerdings ist für Gleichung 28 keine analytische Lösung in geschlossener Form bekannt. Zur Ermittlung der Nullstelle, also des konkreten Wertes von A2, können jedoch allgemein bekannte Verfahren zur Nullstellenermittlung verwendet werden, beispielsweise das Newton-Verfahren oder das Verfahren der Intervallhalbierung.

Nach numerischer Lösung von Gleichung 28 können die Komponenten Id, Iq des Motorstroms I und λ1 analytisch berechnet werden. Wiederum kann für eine initale Lösung das Optimum aus dem Rechenschritt zuvor verwendet werden.

Natürlich können auch andere Lösungsverfahren angewendet werden.

Im Rahmen der erläuterten Vorgehensweisen muss auch gewährleistet werden, dass die aufgefundene Lösung innerhalb des zulässigen Strombereiches liegt. Zur Überprüfung dieses Sachverhalts können die Gleichungen 13 (in Verbindung mit Gleichung 8), 14 und 16 analytisch gelöst werden. Dadurch ergeben sich ein rechnerischer Minimalwert und ein rechnerischer Maximalwert für den Erregerstrom Ie, welche eingehalten werden müssen. Falls der rechnerische Minimalwert kleiner als 0 ist, wird er auf den Wert 0 angehoben. Falls der rechnerische Maximalwert größer als der maximale Erregerstrom Imax ist, wird anstelle des rechnerischen Maximalwertes der maximale Erregerstrom Imax verwendet. Liegt der Erregerstrom Ie des Stromvektors i=i5 außerhalb des so bestimmten Betriebsbereichs, ist der rechnerische Minimalwert die optimale Lösung. Somit wird sichergestellt, dass die Strombeschränkungen eingehalten werden und immer eine gültige Lösung aufgefunden werden kann, welche alle Beschränkungen erfüllt und gleichzeitig das angeforderte Moment M* bereitstellt.

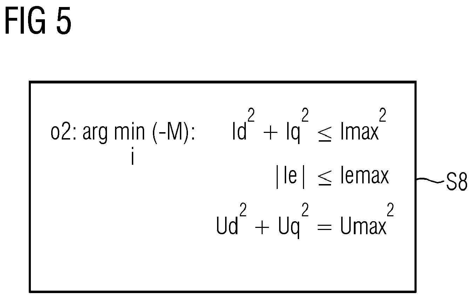

Im Rahmen der Lösung des zweiten Optimierungsproblems O2 ermittelt der Sollwertermittler 10 den Stromvektor i gemäß FIG 5 derart, dass das Istmoment M des Synchronmotors 1 maximiert wird, im Ergebnis also das Istmoment M so weit wie möglich an das Sollmoment M* angenähert wird. Die Verluste V und damit insbesondere auch die Kupferverluste VK werden im Rahmen der Lösung des zweiten Optimierungsproblems O2 nicht berücksichtigt.

Im Rahmen des zweiten Optimierungsproblems O2 berücksichtigt der Sollwertermittler 10 als ergänzende Bedingung, dass Gleichung 16 erfüllt ist. Dies korrespondiert inhaltlich mit dem Bestreben, den Umrichter 4 so weit wie möglich auszusteuern, so dass das Istmoment M des Synchronmotors 1 maximiert wird.

Weiterhin berücksichtigt der Sollwertermittler 10 im Rahmen des zweiten Optimierungsproblems O2 zweite allgemeine Randbedingungen. Gemäß diesen Randbedingungen ist gefordert, dass

- der Betrag des Motorstroms I maximal den Maximalwert Imax für den Motorstrom I erreicht (Ungleichung 10) und
- der Betrag des Erregerstroms Ie maximal den Maximalwert Iemax für den Erregerstrom Ie erreicht (Ungleichung 11).

Mathematisch lässt sich das zweite Optimierungsproblem O2 also wie folgt formulieren:

$$i = \arg\min_{i}(-M) \qquad\qquad (29)$$

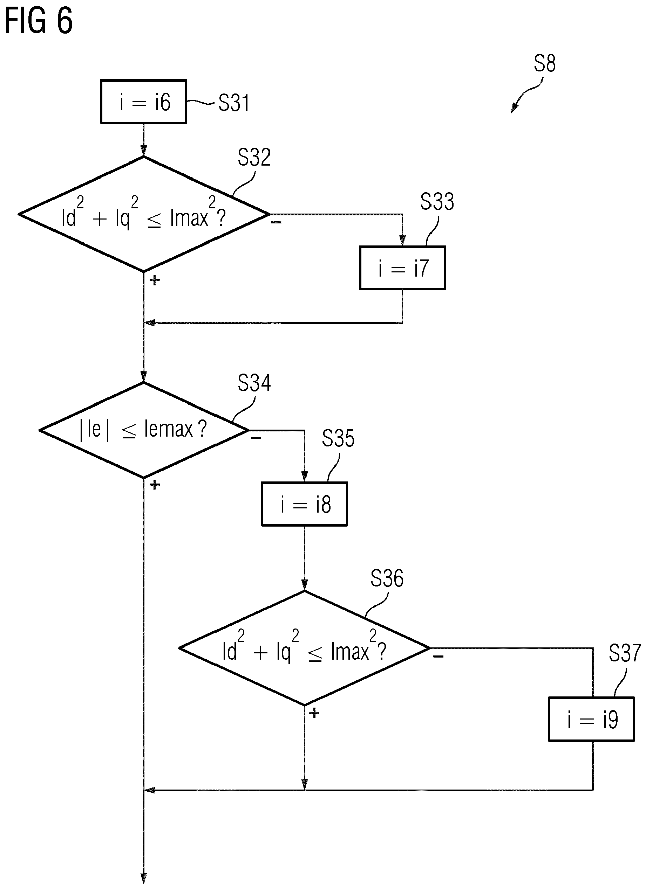

wobei der Sollwertermittler 10 weiterhin auch Gleichung 16 und die Ungleichungen 10 und 11 mit berücksichtigt. Die genaue Vorgehensweise zum Lösen des zweiten Optimierungsproblems O2 wird in Verbindung mit FIG 6 näher erläutert.

FIG 6 zeigt die konkrete Vorgehensweise, mittels derer der Sollwertermittler 10 im Rahmen der Lösung des zweiten Optimierungsproblems O2 den Stromvektor i ermittelt.

Gemäß FIG 6 ermittelt der Sollwertermittler 10 den Stromvektor i zunächst in einem Schritt S31 als Stromvektor i6. Den Stromvektor i6 ermittelt der Sollwertermittler 10 ohne Berücksichtigung der zweiten allgemeinen Randbedingungen. Er löst also zwar das zweite Optimierungsproblem O2 gemäß Gleichung 29 unter zusätzlicher Berücksichtigung von Gleichung 16. Die Gleichungen 10 und 11 berücksichtigt der Sollwertermittler 10 im Schritt S31 nicht.

Der Schritt S31 kann in der Praxis beispielsweise durch einen Lagrange-Ansatz exakt analytisch gelöst werden. Diese Lösung kann analog zur Bestimmung der Stromvektoren i2 und i3 erfolgen.

Die im Schritt S31 ermittelte Lösung ist nur vorläufig. Bevor der Sollwertermittler 10 den Stromvektor i6 als endgültigen Stromvektor i übernimmt, prüft der Sollwertermittler 10 zunächst in einem Schritt S32, ob der Betrag des Motorstroms I maximal den Maximalwert Imax für den Motorstrom I erreicht.

Besteht der Stromvektor i=i6 die Prüfung des Schrittes S32 nicht, ermittelt der Sollwertermittler 10 den Stromvektor i in einem Schritt S33 als Stromvektor i7. Im Schritt S34 löst der Sollwertermittler 10 wieder Gleichung 29. Er berücksichtigt aber zusätzlich nicht nur Gleichung 16, sondern auch Gleichung 14.

Sodann prüft der Sollwertermittler 10 in einem Schritt S34, ob der nunmehr ermittelte Stromvektor i - unabhängig davon, ob es sich um den Stromvektor i6 oder i7 handelt - die Bedingung erfüllt, dass der Erregerstrom Ie Ungleichung 11 erfüllt, also der Betrag des Erregerstroms Ie maximal den Maximalwert Iemax für den Erregerstrom Ie erreicht.

Besteht der Stromvektor i die Prüfung des Schrittes S34, verwendet der Sollwertermittler 10 den der Prüfung zu Grunde gelegten Stromvektor i, also den Stromvektor i=i6 bzw. den Stromvektor i=i7. Besteht der Stromvektor i die Prüfung des Schrittes S34 nicht, ermittelt der Sollwertermittler 10 in einem Schritt S35 als Stromvektor den Stromvektor i8. Im Schritt S35 löst der Sollwertermittler 10 wieder Gleichung 29. Er berücksichtigt aber zusätzlich nicht nur Gleichung 16, sondern auch Gleichung 15.

Analog zu den Vorgehensweisen bei den Stromvektoren i=i2 und i=i3 muss auch bei der Ermittlung der Stromvektoren i=i7 und i=i8 eine Variable weniger variiert werden, weil der Betrag der momentbildenden Komponente Iq anhand des Wertes der feldbildenden Komponente Id ermittelt werden kann bzw. der Betrag des Erregerstroms Ie feststeht.

Im Schritt S35 muss ein weiteres Optimierungsproblem gelöst werden. Dieses Optimierungsproblem maximiert das Moment M mit dem Maximalwert Iemax des Erregerstromes Ie unter Einhaltung der Spannungsbegrenzung gemäß Gleichung 16. Dieses Optimierungsproblem ist für permanenterregte Synchronmaschinen bekannt und besitzt dort eine analytische Lösung. Die Lösungstrajektorie wird in der Literatur als Maximum Torque Per Voltage (MTPV) bezeichnet und ist beispielsweise aus den bereits genannten Dokumenten "Analytical solutions for the optimal reference currents for MTPC/MTPA, MTPV and MTPF control of anisotropic synchronous machines" von H. Eldeeb et al. und "Optimal setpoint computation for constrained torque control of PMSMs" von T. Englert und K. Graichen bekannt. Sie kann 1:1 übernommen werden.

Der Schritt S35 kann in der Praxis beispielsweise durch einen Lagrange-Ansatz exakt analytisch gelöst werden.

In einem Schritt S36 prüft der Sollwertermittler 10 für den Stromvektor i=i8, ob der Betrag des Motorstroms I maximal den Maximalwert Imax für den Motorstrom I erreicht. Besteht der Stromvektor i die Prüfung des Schrittes S36, verwendet der Sollwertermittler 10 den im Schritt S35 ermittelten Stromvektor i=i8. Besteht der Stromvektor i die Prüfung des Schrittes S36 nicht, ermittelt der Sollwertermittler 10 in einem Schritt S37 den Stromvektor i=i9. Im Rahmen der Ermittlung des Stromvektors i9 löst der Sollwertermittler 10 wieder Gleichung 29. Er berücksichtigt aber zusätzlich nicht nur Gleichung 16, sondern auch Gleichung 14.

Dieses Optimierungsproblem ist für permanenterregte Synchronmaschinen bekannt und besitzt dort eine analytische Lösung. Die Lösung ist beispielsweise aus den bereits genannten Fundstellen "Analytical solutions for the optimal reference currents for MTPC/MTPA, MTPV and MTPF control of anisotropic synchronous machines" von H. Eldeeb et al. und "Optimal setpoint computation for constrained torque control of PMSMs" von T. Englert und K. Graichen bekannt.

Auch bei der Ausgestaltung von FIG 6 sind Modifikationen der Vorgehensweise möglich. Diese Modifikationen sind analog zu den Modifikationen der Ausgestaltung von FIG 4. Insbesondere ist es möglich, die Prüfungen der Schritte S32 und S34 in umgekehrter Reihenfolge auszuführen und damit vorrangig nicht den Stromvektor i=i7, sondern den Stromvektor i=i8 zu ermitteln. Noch besser ist eine Vorgehensweise, bei welcher die Prüfungen der Schritte S32 und S34 kombiniert sind. Besteht im Rahmen dieser Ausgestaltung der Stromvektor i=i6 auch nur eine der beiden Prüfungen nicht, ermittelt der Sollwertermittler 10 die beiden Stromvektoren i=i7 und i=i8 und prüft für beide Stromvektoren i=i7 und i=i8, ob sie die jeweils andere Prüfung bestehen. Der Sollwertermittler 10 prüft also, ob der Stromvektor i=i7 die Bedingung von Gleichung 11 erfüllt und der Stromvektor i=i8 die Bedingung von Gleichung 10 erfüllt. Bestehen sowohl der Stromvektor i=i7 als auch der Stromvektor i=i8 ihre jeweilige Prüfung, wählt der Sollwertermittler 10 als Stromvektor i denjenigen der beiden Stromvektoren i=i7 und i=i8 aus, der das höhere Istmoment M liefert. Besteht nur einer der beiden Stromvektoren i=i7 und i=i8 seine Prüfung, während der andere der beiden Stromvektoren i=i7 und i=i8 seine Prüfung nicht besteht, wählt der Sollwertermittler 10 als Stromvektor i denjenigen der beiden Stromvektoren i=i7 und i=i8 aus, der seine Prüfung besteht. Bestehen beide Stromvektoren i=i7 und i=i8 ihre jeweilige Prüfung nicht, fährt der Sollwertermittler 10 mit der Ermittlung des Stromvektors i=i9 fort.

Die Stromvektoren i1 bis i4 von FIG 4 sowie i6 bis i9 von FIG 6 können analytisch und damit sehr effizient berechnet werden. Für den Stromvektor i5 ist zwar nur eine numerische Lösung möglich, auch diese Lösung kann jedoch sehr schnell berechnet werden, so dass auch der Stromvektor i5 in Echtzeit ermittelt werden kann. Durch die Aufteilung der beiden Optimierungsprobleme O1, O2 in mehrere Teilprobleme, die je nach Situation (Einhaltung der Strom- und Spannungsbegrenzungen, Einhaltung nur der einen Strombegrenzung, Einhaltung nur der anderen Strombegrenzung usw.) gelöst werden, wird somit insbesondere die Echtzeitfähigkeit für die Ermittlung des Stromvektors i erreicht, wobei der Stromvektor i sowohl die feldbildende Komponente Id als auch die momentbildende Komponente Iq des Motorstroms I als auch den Erregerstrom Ie und damit alle relevanten Ströme umfasst.

Die vorliegende Erfindung weist viele Vorteile auf. So kann das erfindungsgemäße Verfahren bei einer beliebigen FESM verwendet werden. Es sind keine zuvor mit hohem Aufwand aufgenommenen oder vorab berechneten Look-Up-Tables für den Motorstrom I und/oder den Erregerstrom Ie erforderlich. Auch werden keine kritischen Vereinfachungen vorgenommen. Lediglich die Motorparameter müssen bekannt sein. Dadurch kann das erfindungsgemäße Verfahren rasch für einen neuen Synchronmotor 1 angepasst werden. Gegenüber Verfahren, welche nur einen Teilbetriebsbereich der FESM (insbesondere den Grunddrehzahlbereich) betrachten, und danach dann anschließend einen Feldschwächregler verwenden, um die Betriebsgrenzen einzuhalten, bietet das erfindungsgemäße Verfahren den Vorteil, dass alle Betriebsbereiche in energieoptimaler Weise betrachtet werden. Durch die Berechnung des tatsächlich optimalen Betriebspunktes ergibt sich mehr Drehmoment bei gleicher elektrischer Leistung bzw. gleiches Drehmoment bei geringerer elektrischer Leistung. Durch die Berücksichtigung aller Strom- und Spannungsbegrenzungen ergibt sich ebenfalls ein verbessertes Drehmomentverhalten bei hohen Drehzahlen. Das erfindungsgemäße Betriebsverfahren kann bei allen fremderregten Synchronmotoren 1 gesetzt und angewendet werden. Es ist auch eine Nachrüstung bereits bestehender Antriebe möglich. Gegenüber den Lösungen des Standes der Technik ist zu erwarten, dass das Einsparpotenzial an elektrischer Energie bei mindestens 3 % liegt und bis zu 10 % erreichen kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den Schutzumfang der Erfindung zu verlassen.

Bezugszeichenliste

| | |
|---|---|
| 1 | Synchronmotor |
| 2 | Stator |
| 3 | Motorwicklung |
| 4, 7 | Umrichter |
| 5 | Rotor |
| 6 | Erregerwicklung |
| 8 | Umrichtereinrichtung |
| 9 | Stromregelungseinrichtung |
| 10 | Sollwertermittler |
| 11 | Computerprogramm |
| 12 | Maschinencode |
| 13 | Ermittlungsblock |

| | |
|---|---|
| a, b, c | Phasen |
| i, i1 bis i9 | Stromvektoren |
| I | Motorstrom |
| Id | feldbildende Komponente |
| Ie | Erregerstrom |
| Iq | momentbildende Komponente |
| Imax | Maximalwert (Motorstrom) |
| Iemax | Maximalwert (Erregerstrom) |
| M | Istmoment |
| M* | Sollmoment |
| n | Drehzahl |
| O1, O2 | Optimierungsprobleme |
| P | Leistung |
| Pmax | Maximalwert (Leistung) |
| R | Widerstand (Motorwicklung) |
| Re | Widerstand (Erregerwicklung) |
| S1 bis S37 | Schritte |
| U | Motorspannung |
| Ue | Erregerspannung |
| Ud, Uq | Komponenten der Motorspannung |
| Umax | Maximalwert (Motorspannung) |

| | |
|---|---|
| $\omega$ | elektrische Kreisfrequenz |

**Patentansprüche**

1.  Betriebsverfahren für einen fremderregten Synchronmotor (1), der eine Erregerwicklung (6) und eine Motorwicklung (3) aufweist,

    - wobei ein Sollwertermittler (10) eine momentane Drehzahl (n) des Synchronmotors (1) und ein von dem Synchronmotor (1) aufzubringendes Sollmoment (M*) entgegennimmt,
    - wobei dem Sollwertermittler (10) Maximalwerte (Imax, Iemax, Umax) für einen der Erregerwicklung (6) zugeführten Erregerstrom (Ie), einen der Motorwicklung (3) zugeführten Motorstrom (I), eine den Motorstrom (I) treibende Motorspannung (U) und eine Leistung (P) des Synchronmotors (1) bekannt sind,

- wobei dem Sollwertermittler (10) weiterhin Widerstandswerte (Re, R) der Erregerwicklung (6) und der Motorwicklung (3) bekannt sind,
- wobei der Sollwertermittler (10) prüft, ob eine durch das Produkt der momentanen Drehzahl (n) und des aufzubringenden Sollmoments (M*) gegebene angeforderte Leistung (P) des Synchronmotors (1) den Maximalwert (Pmax) für die Leistung (P) übersteigt,
- wobei der Sollwertermittler (10) in dem Fall, dass die angeforderte Leistung (P) den Maximalwert (Pmax) für die Leistung (P) nicht übersteigt, ein erstes Optimierungsproblem (O1) für einen Stromvektor (i) ansetzt und in Echtzeit löst und/oder in dem Fall, dass die angeforderte Leistung (P) den Maximalwert (Pmax) für die Leistung (P) übersteigt, ein zweites Optimierungsproblem (O2) für den Stromvektor (i) ansetzt und in Echtzeit löst,
- wobei der Stromvektor (i) je eine Komponente für eine feldbildende Komponente (Id) des Motorstroms (I), eine momentbildende Komponente (Iq) des Motorstroms (I) und den Erregerstrom (Ie) aufweist,
- wobei der Sollwertermittler (10) den Stromvektor (i) im Rahmen der Lösung des ersten Optimierungsproblems (O1) derart ermittelt, dass in der Erregerwicklung (6) und der Motorwicklung (3) auftretende Verluste (V) minimiert werden,
- wobei der Sollwertermittler (10) im Rahmen des ersten Optimierungsproblems (O1) als ergänzende Bedingung berücksichtigt, dass ein sich aufgrund des Erregerstroms (Ie) und des Motorstroms (I) ergebendes Istmoment (M) des Synchronmotors (1) dem Sollmoment (M*) entspricht,
- wobei der Sollwertermittler (10) im Rahmen des ersten Optimierungsproblems (O1) weiterhin erste allgemeine Randbedingungen berücksichtigt, gemäß denen

-- der Betrag des Motorstroms (I) maximal den Maximalwert (Imax) für den Motorstrom (I) erreicht,
-- der Betrag des Erregerstroms (Ie) maximal den Maximalwert (Iemax) für den Erregerstrom (Ie) erreicht und
-- der Betrag der Motorspannung (U) maximal den Maximalwert (Umax) für die Motorspannung (U) erreicht,

- wobei der Sollwertermittler (10) den Stromvektor (i) im Rahmen der Lösung des zweiten Optimierungsproblems (O2) derart ermittelt, dass das sich ergebende Istmoment (M) des Synchronmotors (1) maximiert wird,
- wobei der Sollwertermittler (10) im Rahmen des zweiten Optimierungsproblems (O2) als ergänzende Bedingung berücksichtigt, dass der Betrag der Motorspannung (U) gleich dem Maximalwert (Umax) für die Motorspannung (U) ist,
- wobei der Sollwertermittler (10) im Rahmen des zweiten Optimierungsproblems (O2) weiterhin zweite allgemeine Randbedingungen berücksichtigt, gemäß denen

-- der Betrag des Motorstroms (I) maximal den Maximalwert (Imax) für den Motorstrom (I) erreicht und
-- der Betrag des Erregerstroms (Ie) maximal den Maximalwert (Iemax) für den Erregerstrom (Ie) erreicht, und

- wobei der Sollwertermittler (10) die Komponenten des durch Lösen des ersten oder des zweiten Optimierungsproblems (O1, O2) ermittelten Stromvektors (i) einer Stromregelungseinrichtung (9) für eine Umrichtereinrichtung (8) als Sollwerte vorgibt, so dass die Stromregelungseinrichtung (9) die Umrichtereinrichtung (8) so ansteuert, dass die Umrichtereinrichtung (8) der Erregerwicklung (6) den Erregerstrom (Ie) und der Motorwicklung (3) den Motorstrom (I) zuführt.

2. Betriebsverfahren nach Anspruch 1,
**dadurch gekennzeichnet,**
**dass** der Sollwertermittler (10) im Rahmen der Lösung des ersten Optimierungsproblems (O1)

- den Stromvektor (i) zunächst ohne Berücksichtigung der ersten allgemeinen Randbedingungen vorläufig ermittelt,
- sodann prüft, ob der vorläufig ermittelte Stromvektor (i) die ersten allgemeinen Randbedingungen erfüllt,
- den vorläufig ermittelten Stromvektor (i) als Stromvektor (i) verwendet, wenn der vorläufig ermittelte Stromvektor (i) die ersten allgemeinen Randbedingungen erfüllt, und anderenfalls den Stromvektor (i) unter Berücksichtigung mindestens einer der folgenden ersten speziellen Randbedingungen ermittelt, gemäß denen

-- der Betrag des Motorstroms (I) gleich dem Maximalwert (Imax) für den Motorstrom (I) ist,
-- der Betrag des Erregerstroms (Ie) gleich dem Maximalwert (Iemax) für den Erregerstrom (Ie) ist und
-- der Betrag der Motorspannung (U) gleich dem Maximalwert (Umax) für die Motorspannung (U) ist, und

- in Abhängigkeit davon, welche der ersten allgemeinen Randbedingungen nicht erfüllt sind, bestimmt, welche der ersten speziellen Randbedingungen er berücksichtigt.

3. Betriebsverfahren nach Anspruch 2,
**dadurch gekennzeichnet,**
**dass** der Sollwertermittler (10) im Rahmen der Prüfung, ob der vorläufig ermittelte Stromvektor (i) die ersten allgemeinen Randbedingungen erfüllt,

- zuerst prüft, ob der Betrag des Motorstroms (I) maximal den Maximalwert (Imax) für den Motorstrom (I) erreicht und der Betrag des Erregerstroms (Ie) maximal den Maximalwert (Iemax) für den Erregerstrom (Ie) erreicht, und
- erst danach prüft, ob der Betrag der Motorspannung (U) maximal den Maximalwert (Umax) für die Motorspannung (U) erreicht.

4. Betriebsverfahren nach Anspruch 1, 2 oder 3,
**dadurch gekennzeichnet,**
**dass** der Sollwertermittler (10) im Rahmen der Lösung des zweiten Optimierungsproblems (O2)

- den Stromvektor (i) zunächst ohne Berücksichtigung der zweiten allgemeinen Randbedingungen vorläufig ermittelt,
- sodann prüft, ob der vorläufig ermittelte Stromvektor (i) die zweiten allgemeinen Randbedingungen erfüllt,
- den vorläufig ermittelten Stromvektor (i) als Stromvektor (i) verwendet, wenn der vorläufig ermittelte Stromvektor (i) die zweiten allgemeinen Randbedingungen erfüllt, und anderenfalls den Stromvektor (i) unter Berücksichtigung mindestens einer der folgenden zweiten speziellen Randbedingungen ermittelt, gemäß denen

-- der Betrag des Motorstroms (I) gleich dem Maximalwert (Imax) für den Motorstrom (I) ist und
-- der Betrag des Erregerstroms (Ie) gleich dem Maximalwert (Iemax) für den Erregerstrom (Ie) ist, und

- in Abhängigkeit davon, welche der zweiten allgemeinen Randbedingungen nicht erfüllt sind, bestimmt, welche der zweiten speziellen Randbedingungen er berücksichtigt.

5. Betriebsverfahren nach Anspruch 4,
**dadurch gekennzeichnet,**
**dass** der Sollwertermittler (10) im Rahmen der Prüfung, ob der vorläufig ermittelte Stromvektor (i) die zweiten allgemeinen Randbedingungen erfüllt,

- zuerst prüft, ob der Betrag des Motorstroms (I) maximal den Maximalwert (Imax) für den Motorstrom (I) erreicht, und
- erst danach prüft, ob der Betrag des Erregerstroms (Ie) maximal den Maximalwert (Iemax) für den Erregerstrom (Ie) erreicht.

6. Betriebsverfahren nach einem der obigen Ansprüche,
**dadurch gekennzeichnet,**
**dass** der Sollwertermittler (10) als Verluste (V) nur die Kupferverluste (VK) berücksichtigt.

7. Computerprogramm für einen Sollwertermittler (10), wobei das Computerprogramm Maschinencode (12) umfasst, der von dem Sollwertermittler (10) abarbeitbar ist, wobei die Abarbeitung des Maschinencodes (12) durch den Sollwertermittler (10) bewirkt, dass der Sollwertermittler (10) ein Betriebsverfahren nach einem der obigen Ansprüche ausführt.

8. Sollwertermittler (10) zum Ermitteln von Sollwerten für einen Erregerstrom (Ie) und einen Motorstrom (I) eines fremderregten Synchronmotors (1), wobei der Sollwertermittler (10) mit einem Computerprogramm (11) nach Anspruch 6 programmiert ist, so dass er im Betrieb ein Betriebsverfahren nach einem der Ansprüche 1 bis 6 ausführt.

9. Antrieb,

- wobei der Antrieb einen fremderregten Synchronmotor (1) mit einer Erregerwicklung (6) und einer Motorwicklung (3) aufweist,
- wobei der Antrieb eine Umrichtereinrichtung (8) aufweist, die zum Zuführen eines Erregerstroms (Ie) mit der Erregerwicklung (6) und zum Zuführen eines Motorstroms (I) mit der Motorwicklung (3) verbunden ist,
- wobei der Antrieb eine Stromregelungseinrichtung (9) aufweist, welche die Umrichtereinrichtung (8) ansteuert,
- wobei der Antrieb einen Sollwertermittler (10) nach Anspruch 8 aufweist,
- wobei der Sollwertermittler (10) Eingänge zum Entgegennehmen einer momentanen Drehzahl (n) des Synchronmotors (1) und eines von dem Synchronmotor (1) aufzubringenden Sollmoments (M*) aufweist,
- wobei der Sollwertermittler (10) zum Vorgeben eines Wertes für eine feldbildende Komponente (Id) des Motorstroms (I) und eines Wertes für eine momentbildende Komponente (Iq) des Motorstroms (I) und eines Wertes für den Erregerstrom (Ie) mit der Stromregelungseinrichtung (9) verbunden ist.

# FIG 1

EP 4 213 368 A1

# FIG 2

$$\text{Imax, Iemax, Umax} \quad \sim S1$$

$$R, Re \quad \sim S2$$

$$Pmax = Umax \cdot Imax - RImax^2 \quad \sim S3$$

$$n, M^* \quad \sim S4$$

$$P = 2\pi nM^* \quad \sim S5$$

$$P > Pmax ? \quad S6$$

$$O1 \rightarrow i = (Id, Iq, Ie) \quad S7$$

$$O2 \rightarrow i = (Id, Iq, Ie) \quad \sim S8$$

$$i^* \rightarrow 9 \quad \sim S9$$

# FIG 3

$$\text{o1: } \underset{i}{\arg \min} V: \qquad Id^2 + Iq^2 \leq Imax^2$$

$$|Ie| \leq Iemax$$

$$Ud^2 + Uq^2 \leq Umax^2$$

$$M = M^*$$

~S7

# FIG 4

S7

S11: $i = i1$

S12: $Id^2 + Iq^2 \leq Imax^2$?

S14: $i = i2$

S13: $|Ie| \leq Iemax$?

S16: $|Ie| \leq Iemax$?

S15: $i = i3$

S17: $Id^2 + Iq^2 \leq Imax^2$?

S18: $i = i4$

S19: $Ud^2 + Uq^2 \leq Umax^2$?

S20: $i = i5$

# FIG 5

$$\text{o2: } \underset{i}{\arg\min} (-M): \quad Id^2 + Iq^2 \leq Imax^2$$

$$|Ie| \leq Iemax$$

$$Ud^2 + Uq^2 = Umax^2$$

S8

# FIG 6

S8

i = i6 — S31

S32

$Id^2 + Iq^2 \leq Imax^2$?

—

S33

i = i7

+

S34

$|Ie| \leq Iemax$?

—

S35

i = i8

+

S36

$Id^2 + Iq^2 \leq Imax^2$?

—

S37

i = i9

+

Europäisches
Patentamt

European
Patent Office

Office européen
des brevets

## EUROPÄISCHER RECHERCHENBERICHT

**Nummer der Anmeldung**

**EP 22 15 1805**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2014 223014 A1 (BAYERISCHE MOTOREN WERKE AG [DE]) 12. Mai 2016 (2016-05-12)<br>* Absatz [0001] *<br>* Absatz [0059] - Absatz [0063] *<br>* Absätze [0052], [0054] *<br>* Absatz [0064] - Absatz [0068] *<br>* Absatz [0102] - Absatz [0108] *<br>* Absatz [0030] - Absatz [0034] *<br>* Absatz [0025] *<br>-----  | 1,6-9 | INV.<br>H02P6/32 |
| A | US 2008/001570 A1 (GAETANI ANGELO [IT] ET AL) 3. Januar 2008 (2008-01-03)<br>* Absatz [0039] - Absatz [0108];<br>Abbildungen 2-5 *<br>-----  | 1-9 | |
| A,D | ENGLERT TOBIAS ET AL: "Optimal Setpoint Computation for Constrained Torque Control of PMSMs",<br>2018 EUROPEAN CONTROL CONFERENCE (ECC),<br>EUROPEAN CONTROL ASSOCIATION (EUCA),<br>12. Juni 2018 (2018-06-12), Seiten 2671-2677, XP033455936,<br>DOI: 10.23919/ECC.2018.8550580<br>[gefunden am 2018-11-27]<br>* Seite 2673 *<br>-----  | 1-9 | **RECHERCHIERTE SACHGEBIETE (IPC)**<br><br>H02P |

Der vorliegende Recherchenbericht wurde für alle Patentansprüche erstellt

| Recherchenort | Abschlußdatum der Recherche | Prüfer |
|---|---|---|
| München | 30. Juni 2022 | Schürle, Patrick |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 22 15 1805

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-06-2022

| Im Recherchenbericht angeführtes Patentdokument | Datum der Veröffentlichung | Mitglied(er) der Patentfamilie | Datum der Veröffentlichung |
|---|---|---|---|
| DE 102014223014 A1 | 12-05-2016 | KEINE | |
| US 2008001570 A1 | 03-01-2008 | AT 467260 T | 15-05-2010 |
| | | CN 101103518 A | 09-01-2008 |
| | | EP 1787385 A1 | 23-05-2007 |
| | | JP 2008512078 A | 17-04-2008 |
| | | KR 20070067118 A | 27-06-2007 |
| | | US 2008001570 A1 | 03-01-2008 |
| | | WO 2006024920 A1 | 09-03-2006 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **O. HAALA ; B. WAGNER ; M. HOFMANN ; M. MARZ.** Optimal current control of externally excited synchronous machines in automotive traction drive applications. *International Journal of Electrical and Computer Engineering,* 2013, vol. Band, 1133-1139
- **D. SCHRODER.** Elektrische Antriebe: Regelung von Antriebssystemen. Springer-Verlag, 2009
- **H. ELDEEB ; C. M. HACKL ; J. KULLICK ; L. HORL-BECK.** Analytical solutions for the optimal reference currents for MTPC/MTPA, MTPV and MTPF control of anisotropic synchronous machines. *Proc. 2017 IEEE International Electric Machines and Drives Conference (IEMDC),* 2017, 1-6
- **T. ENGLERT ; K. GRAICHEN.** Optimal setpoint computation for constrained torque control of PMSMs. *Proc. 2018 European Control Conference (ECC),* 2018, 2671-2677
- **H. ELDEEB.** *Analytical solutions for the optimal reference currents for MTPC/MTPA, MTPV and MTPF control of anisotropic synchronous machines*
- **T. ENGLERT ; K. GRAICHEN.** *Optimal setpoint computation for constrained torque control of PMSMs*